# EUROPEAN PATENT SPECIFICATION

(11) **EP 2 881 230 B1**
(45) Date of publication and mention of the grant of the patent: **18.10.2017**
(21) Application number: 14194314.2
(22) Date of filing: 21.11.2014
(51) Int. Cl.: B29C 33/00, B29D 30/06, B29L 30/00, B29C 33/10

(54) **Ventless segmented tire mold**
Segmentierte Reifenform ohne Entlüftungsöffnung
Moule de pneu segmenté sans orifice

(30) Priority: 27.11.2013 US 201361909634 P
(43) Date of publication of application: 10.06.2015
(73) Proprietor: The Goodyear Tire & Rubber Company, Akron, Ohio 44316 (US)
(72) Inventor: Piret, Gauthier, B-4970 Ster-Francorchamps (BE); Dahlberg, Johan Peter, L-1224 Luxembourg (LU); Colle, Kevin Roger Marie Ghislain, B-6600 Bastogne (BE)
(74) Representative: Kutsch, Bernd

(56) References cited:
- EP-A1- 1 495 848
- EP-A2- 0 701 894
- US-A- 4 595 553
- US-A1- 2010 193 134
- US-A1- 2013 008 611

## Description

### Field of the Invention

The present invention relates to a mold for curing/producing tires and to a method and apparatus or mold container associated therewith, and more particularly, to a ventless tire mold.

### Background of the Invention

Conventional tires are vulcanized within a tire mold. A tire mold may be a two-piece tire mold featuring various seals and pressurized compartments. Such a two-piece tire mold may utilize a vacuum. A tire mold may be segmented, as opposed to a two-piece tire mold. Conventional tire molds have small holes or vents to allow air trapped within the mold to escape. When the tire is vulcanized and removed from the tire mold, rubber that has been vulcanized within the vents in the tire mold may extend outwardly from the surface of the tire in the form of burrs or extensions. These burrs may detract from the tire's appearance and may be shaved from the tire as a final step in the tire manufacturing process. While the rubber burrs have been a necessary result of the tire manufacturing process, they were undesirable for several reasons.

First, the extensions are unnecessary waste. Second, the extensions create undesirable material, which must be collected and properly disposed. Third, the removal of the extensions requires an extra step in the tire manufacturing process, thus raising the cost of manufacturing the tire due to the extra space, labor, time, and equipment required. Fourth, the overall cost of the molds increases and the overall cost of cleaning the vents may also be substantial. Tires could be less expensive and more attractive in appearance when such extensions are eliminated.

One way to eliminate such extensions is to vulcanize the tire in a ventless mold. Ventless segmented tire molds and methods may be simpler in design, more effective in use, and more adaptable for production of tires on a commercial scale.

Tire designs are becoming more and more complex. Evacuating air through vents becomes more and more challenging. Also, space for installation becomes less and less. The vents are becoming smaller and smaller and more and more vents are needed in order to evacuate all the cavities appropriately. Some tire compounds with a low viscosity are difficult to evacuate with vents. As a result, the cost of the venting and the maintenance of the vents is increasing. Vents may plug more and more often. Molds require more frequent cleaning. Vents, when definitively plugged, must be changed out more and more often. The total cost of the tires that have to be scrapped due to these issues is significant. Curing under vacuum in a ventless mold resolves many of all these issues.

EP-A-0 701 894 describes a ventless segmented tire mold and a respective mold container for vulcanizing tires in accordance with the preamble of claim 1.

Similar systems comprising a mold container and a segmented tire mold housed in such a mold container are described in US-A-2010/0193134 and EP-A-1 495 848.

### Summary of the Present Invention

The invention relates to a system for providing a vacuum in a segmented tire mold in accordance with claim 1.

Dependent claims refer to preferred embodiments of the invention.

Preferably, the mold is a ventless tire mold.

The system in accordance with the present invention provides a vacuum in a segmented tire mold having an upper sidewall assembly and a lower sidewall assembly, a plurality of radially moveable tread mold segments operable with the upper sidewall assembly and the lower sidewall assembly to define a tire mold cavity in the closed position of the tire mold, a conical actuating ring assembly surrounding the tread mold segments and the tread mold segments to provide radial movement of the tread mold segments into engagement with the upper sidewall assembly and the lower sidewall assembly. The system includes a vacuum container comprising a top sealing means between the actuating ring assembly and the upper sidewall assembly and a bottom sealing means between the actuating ring assembly and the lower sidewall assembly such that the tire mold is airtight only when fully closed and evacuated only when fully closed.

According to a preferred aspect of the system, a screw sealing means may be provided between external screws and mold pieces. According to another preferred aspect of the system, an inside sealing means may be provided between adjacent surfaces within the tire mold.

The top sealing means comprise cellular or massive silicone.

The bottom sealing means comprise cellular or massive silicone.

According to yet another preferred aspect of the system, the screw sealing means may comprise cellular or massive silicone.

According to still another preferred aspect of the system, the inside sealing means comprises cellular or massive silicone.

The tire mold and the vacuum container comprises no sliding seals.

According to still another preferred aspect of the system, two sealing means are disposed between the spacer plate and the sidewall assembly on one side and the actuating ring assembly on the other side.

According to yet another preferred aspect of the system, the bottom sealing means includes a sealing member disposed between the bottom surface of the actuating ring assembly and the lower sidewall assembly at the closing of the tire mold.

According to still another preferred aspect of the system, the tread mold segments are connected to the upper sidewall assembly by support means permitting radial movement of the tread mold segments in response to vertical movement of the actuating ring assembly relative to the tread mold segments and the support means is covered to maintain the integrity of the tire mold cavity for application of vacuum.

According to yet another preferred aspect of the system, the upper sidewall assembly has a radially outer cylindrical surface, the actuating ring assembly has a radially inner cylindrical surface in alignment with the outer cylindrical surface of the upper sidewall assembly and the bottom sealing means is disposed between the outer cylindrical surface of the upper sidewall assembly and the inner cylindrical surface of the actuating ring assembly.

According to still another preferred aspect of the system, the bottom sealing means includes a sealing member disposed in a circumferential groove in the outer cylindrical surface of the upper sidewall assembly for sealing engagement with the inner cylindrical surface of the actuating ring assembly during closing of the tire mold.

According to another preferred aspect of the system, the support means comprises pocket slots closed at the top in the upper sidewall assembly and retainer tee members on the tire mold segments for engagement in the pocket slots.

### Brief Description of the Drawings

The present invention may take physical form in certain parts and arrangements of parts, examples of which will be described in detail in this specification and illustrated in the accompanying drawings, which form a part hereof and wherein:
FIG. 1 is schematic cross-sectional view of one half of a ventless segmented tire mold for use with the present invention.
FIG. 2 is a schematic cross-sectional view taken along line 2--2 of FIG. 1, illustrating one of the retainer tees.
FIG. 3 is a schematic cross-sectional view illustrating a first step in a method of installing a tire mold for use with the present invention.
FIG. 4 is a schematic cross-sectional view illustrating a second step in a method of installing a tire mold for use with the present invention.
FIG. 5 is a schematic cross-sectional view illustrating a third step in a method of installing a tire mold for use with the present invention.
FIG. 6 is a schematic cross-sectional view illustrating a fourth step in a method of installing a tire mold for use with the present invention.
FIG. 7 is a schematic cross-sectional view illustrating a first step in a method of disassembling a tire mold for use with the present invention.
FIG. 8 is a schematic cross-sectional view illustrating a second step in a method of disassembling a tire mold for use with the present invention.
FIG. 9 is a schematic cross-sectional view illustrating a third step in a method of disassembling a tire mold for use with the present invention.
FIG. 10 is a schematic cross-sectional view illustrating a fourth step in a method of disassembling a tire mold for use with the present invention.
FIG. 11 is a schematic cross-sectional view illustrating a fifth step in a method of disassembling a tire mold for use with the present invention.
FIG. 12 is a schematic cross-sectional view of one half of a tire mold for use with the present invention.
FIG. 13 is a schematic cross-sectional view of one half of another tire mold for use with the present invention.
FIG. 14 is a schematic cross-sectional view of a support rod for a tire mold for use with the present invention.
FIG. 15 is a schematic cross-sectional view of one half of another tire mold for use with the present invention.
FIG. 16 is a schematic cross-sectional view of one half of the tire mold shown in FIG. 15 in a closed condition.
FIG. 17 is a schematic cross-sectional view of one half of a tire mold in a closed condition.
FIG. 18 is a schematic cross-sectional view of the tire mold shown FIG. 16 in an air tight and vacuum activated condition.
FIG. 19 is a schematic cross-sectional view of one half of a tire mold as shown in FIGS. 16 and 17 with the tire mold closed and the vacuum shut off.

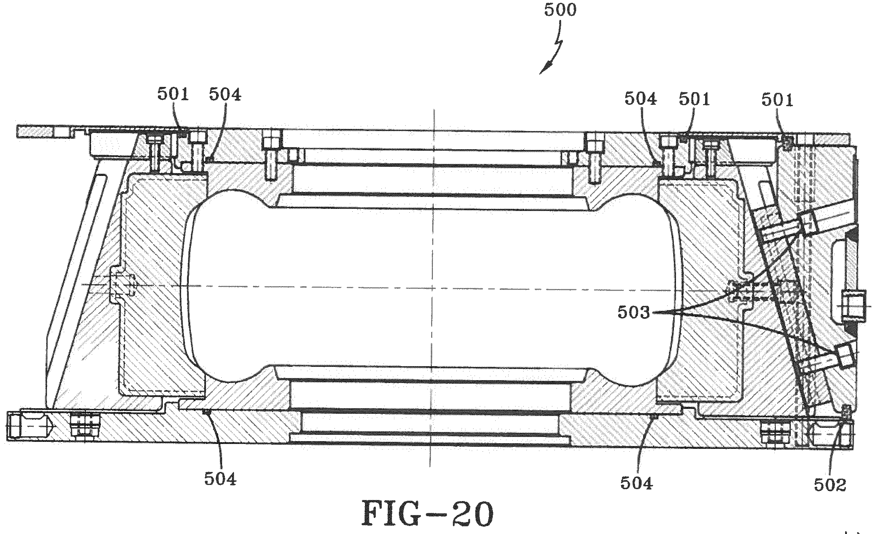

FIG. 20 is a schematic cross-sectional view one half of a ventless segmented tire mold in accordance with the present invention.

### Description of Example Embodiments of the Present Invention

Two primary regions are to be sealed when curing with a standard segmented mold: the bottom and the top. In the bottom region, a space between an actuating ring and a bottom container plate may be sealed. A seal may be fixed to the actuating ring. The seal may be compressed between the actuating ring and the bottom container plate during each cure cycle to fill the varying gap between the actuating ring and the bottom container plate. In the top region, a space between the actuating ring and a top container plate may be sealed. A spacer plate, fixed on the actuating ring, may close a gap between the actuating ring and the top container plate by covering slots of retainer tee members. A first seal may be installed between the actuating ring and the spacer plate and remain static. A second seal may be fixed to the top container plate and may be compressed between the spacer plate and the top container plate during each cure cycle to fill the varying gap between the two pieces. Screws and stop bolts in the mold segments may also be sealed by sealing washers.

The region between the top and bottom container plates and mold plates may also be sealed. O-rings may be used, but other types of seal may also be used. The system in accordance with the present invention maintains the mold in an airtight condition only when the container is completely closed. The mold may be evacuated by a pumping assembly when completely closed. All these seals may thus be non-sliding. The seals may be compressed and may be either static or compressed and released at each cure cycle.

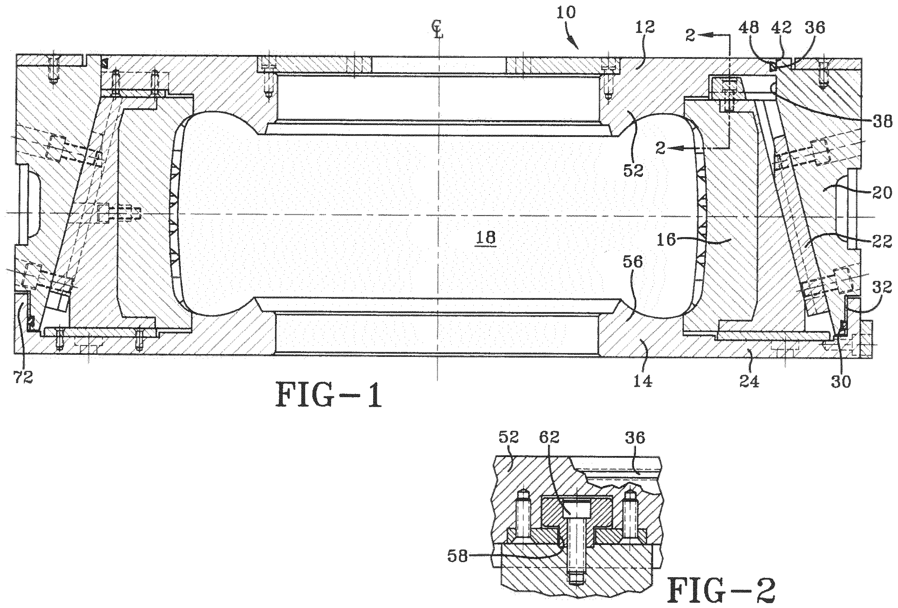

Referring now to the drawings for the purpose of illustrating examples of the invention, FIG. 1 is a schematic cross-sectional view of a segmented tire mold 10 for use with the present invention. Primary elements of the tire mold 10 include an upper sidewall mold assembly 12 and a lower sidewall mold assembly 14. The upper sidewall mold assembly 12 includes an upper sidewall mold plate 52. The lower sidewall assembly 14 includes a lower sidewall mold plate 56. The tire mold 10 further includes a tread mold segment 16. In the segmented tire mold 10, a plurality of tread mold segments 16 are radially moveable to assemble or disassemble the segmented tire mold about an unvulcanized green tire.

In FIG. 1, the upper sidewall mold assembly 12 comprises only two members, an upper sidewall mold plate 52 and an O-ring 36 forming a structure impervious to air. Therefore, when coupled with the O-ring 36, the upper sidewall mold plate 52 may provide an air barrier for drawing a vacuum in a tire mold cavity 18.

The upper and lower sidewall mold assemblies 12, 14, respectively, and the tread mold segments 16 together define the tire mold cavity 18 within the tire mold 10. The tread segments 16 are moveable radially inward or outward along a sloped slide 22, in response to vertical movement by a conical actuating ring 20. The actuating ring 20 is moveable in a generally axial direction or a vertical direction relative to the unvulcanized tire within the tire mold 10.

A first sealing means seals a gap between the actuating ring 20 and a lower mold member 24. The first sealing means may include an O-ring 30 and an abutting bronze cylindrical surface 32 on the actuating ring 20. The abutting bronze surface 32 may be affixed to the actuating ring 20 and may about the lower mold member 24.

A second sealing means seals a gap between the actuating ring 20 and the upper sidewall mold plate 52. The second sealing means may include an O-ring 36 which abuts a radially inner cylindrical surface 38. The upper sidewall mold plate 52 may have a radially outer cylindrical surface 42 in alignment with the radially inner cylindrical surface 38 of the actuating ring 20.

The O-ring 36 may be disposed in a circumferential groove 48 in the outer cylindrical surface 42 of the upper sidewall mold plate 52 and in sealing engagement with the inner cylindrical surface 38 of the actuating member 20 when the tire mold 10 is in a closed condition. The tread mold segments 16 may be connected to the upper sidewall mold member 52 by pocket type slots 58 which may be closed at the top in the upper sidewall mold plate 52 and retainer tee members 62 on the tread mold segments 16 for sliding engagement in the pocket type slots (FIGS. 1 & 2).

The tread mold segments 16 may be assembled into slide blocks and arranged on a table 80. The table 80 may have a lubricated surface such that the tread mold segments 16 may be easily arranged in appropriate positions. The retainer tee members 62 may be inserted into the pocket type slots 58. The O-ring 36 may be inserted into the circumferential groove 48 in the upper sidewall mold plate 52. The upper sidewall mold plate 52 may be suspended in a raised position while the tread mold segments 16 and retainer tee members 62 are slid in place (FIGS. 2-6).

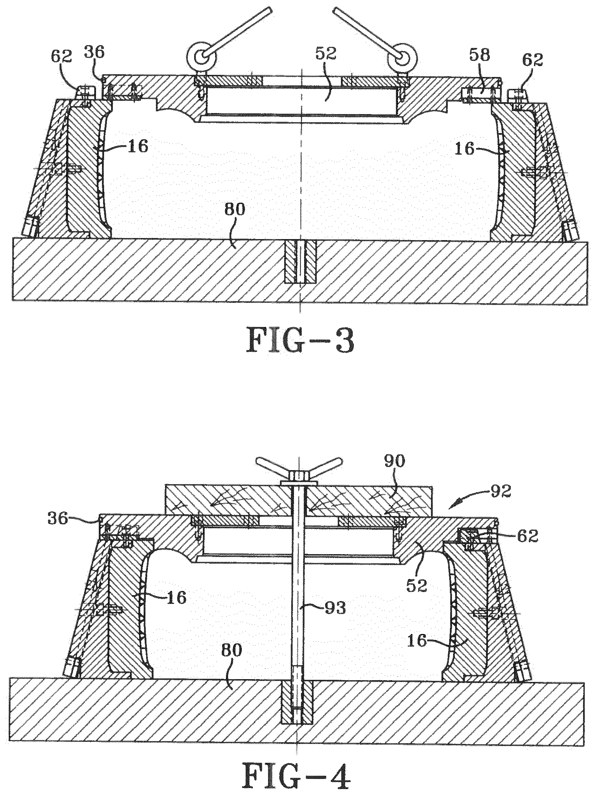

With reference to FIG. 4, when all the tread mold segments 16 are in proper position in the upper sidewall mold assembly 12, the upper sidewall mold plate 52 may be clamped on the table 80 with a wooden clamp bar 90 by a clamping rod 93. Clamping may not be necessary where weight keeps parts in place.

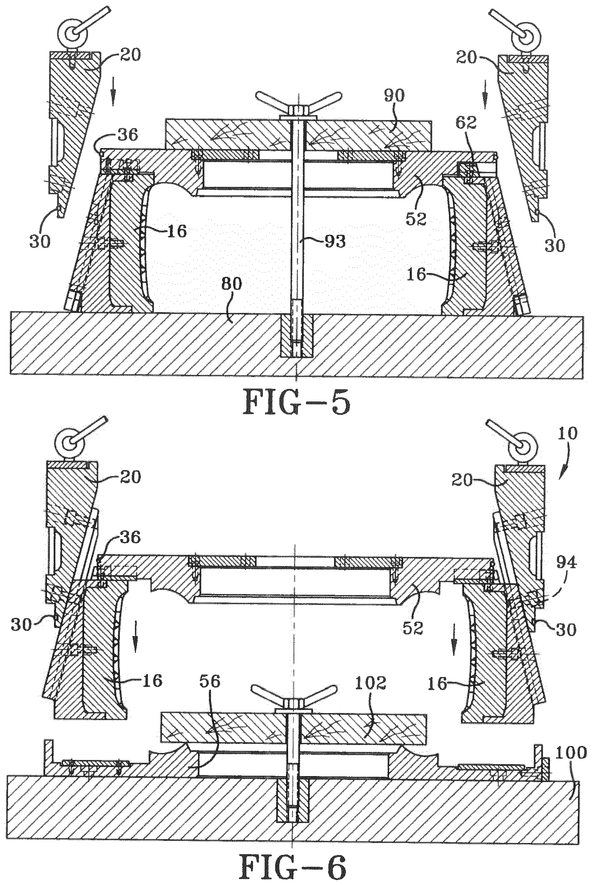

With reference to FIG. 5, the actuating ring 20 may be fitted with the O-ring 30 and lowered over the assembly 12. Stop bolts 94 (FIG. 6) may then be installed. Next, the wooden clamp 90 on the upper sidewall mold plate 52 may be removed with the clamping rod 93. With reference to FIG. 6, the assembly 12 and actuating ring 20 may now be positioned over the lower sidewall mold plate 56, which has been secured to a separate table 100 and clamped with a wooden clamp 102. The suspended assembly 92 and actuating ring 20 may be lowered onto the lower sidewall mold plate 56 and positioned so that the tire mold 10 is fully closed. At this time, shipping straps (not shown) may be installed and the tire 10 made ready to move and install in a tire curing press.

An example procedure for mounting the tire mold 10 into a curing press is as follows. The tire mold 10 is set in position in a curing press. Two temporary hold-down clamps are installed in platen slots 180° opposed t o each other. The tire mold 10 is bolted to the top of the curing press. After the tire mold 10 is opened, a sealant or seal, such as a gasket, is applied to the shoulders of the bolts for sealing. Next, the bolts are installed through the bottom sidewall plate 56 into the platen. The temporary clamps 94 and 102 are removed.

The above procedure enables the tire mold 10 to be installed into a curing press with the O-rings 30, 36 in place. The O-rings 30, 36 may be lubricated with an appropriate lubricant. The O-rings 30, 36 may be lubricated when installed and when the tire mold 10 is cleaned. At every cleaning cycle, the O-rings 30, 36 may be inspected for excessive wear or fraying and may be replaced when worn or damaged.

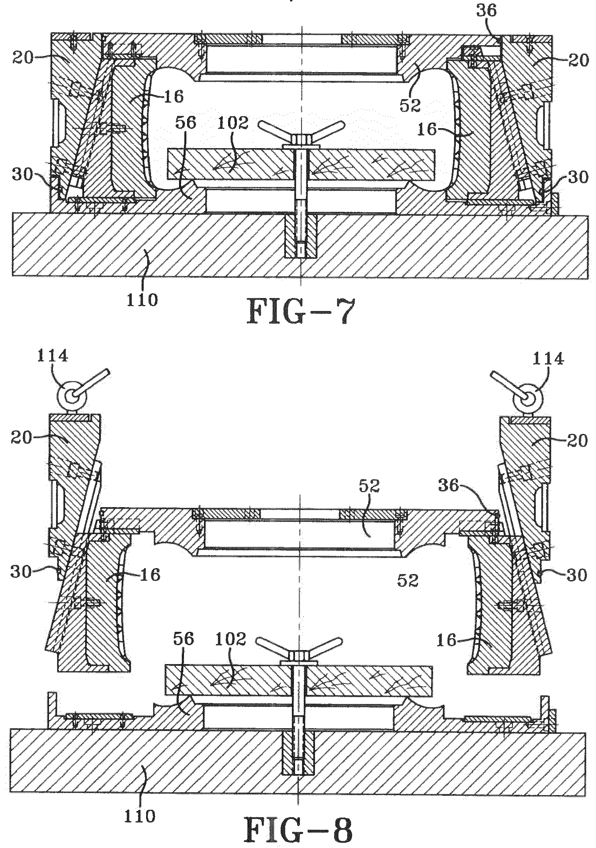

With reference to FIGS. 7 - 11, example disassembly of the tire mold 10 will be described as follows. With reference to FIG. 7, the tire mold 10 has been removed from the curing press and set on a table 110. Shipping straps (not shown) have been removed. The lower sidewall mold plate 56 is clamped to the table 110 with wooden clamp 102.

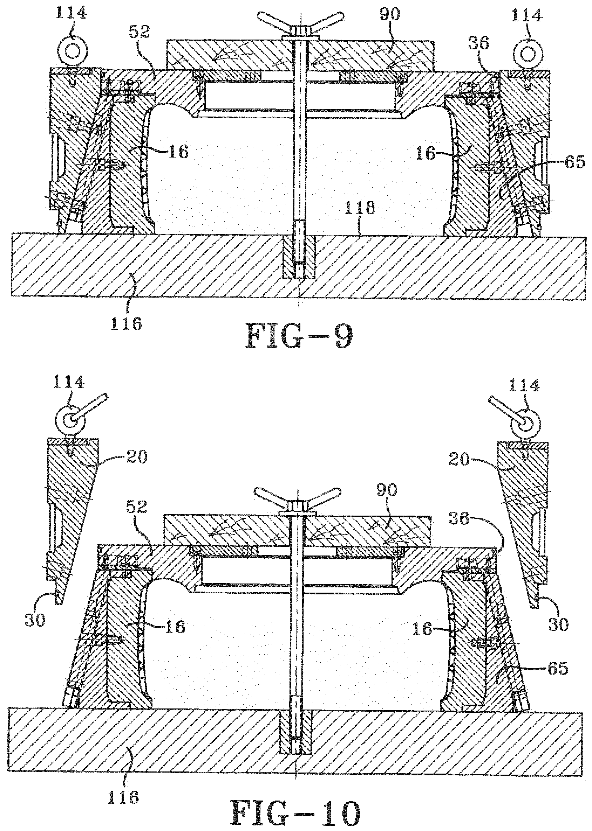

With reference to FIGS. 8 & 9, eye bolts 114 are installed in the actuating ring 20 to raise the balance of the assembly and place it on a second table 116 with a lubricated surface 118. Next, the upper sidewall mold plate 52 is clamped to the table 116 with a wooden clamp 90. The stop bolts 94 (not shown) are removed. With reference to FIG. 10, the actuating ring 20 is lifted via the eye bolts 114 and set on another table (not shown) for lubrication.

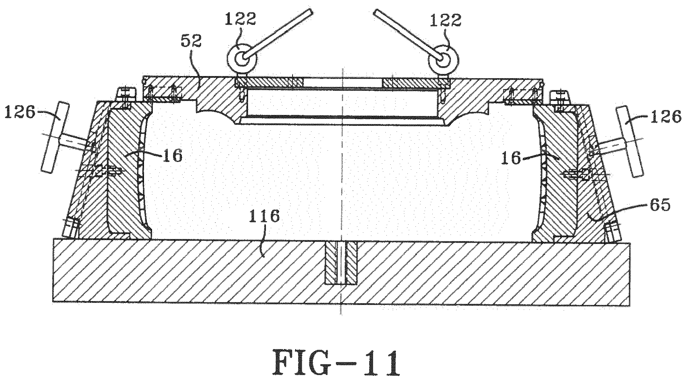

With reference to FIGS. 10 & 11, the wooden clamp 90 is now removed from the upper sidewall mold plate 52. The eye bolts 122 are installed in the upper sidewall mold plate 52. The upper sidewall mold plate 52 is suspended to release its weight off of the slide blocks 16. Where necessary for disassembly, tee handles 126 may be threaded into retraction tee holes in the slide blocks 65 and used to pull the side blocks radially outwardly so that the retainer tee members 62 clear the pocket type slots 58 in the upper sidewall mold plate 52. The tire mold 10 is now ready for cleaning and/or lubricating.

With reference to FIG. 1, while a standard tire mold may have vent holes, the tire mold 10 of FIG. 1 has no vent holes. Further, the upper and lower sidewall mold plates 52, 56 of the tire mold 10 are each a single piece, integral. The integral, one-piece design of the upper and lower sidewall mold plates 52, 56 of the tire mold 10 thus eliminates seals between the multiple parts. With the pocket type slot 58, the tire mold 10 may be closed at the top with the O-ring 36 sealing the tire mold cavity 18.

Additionally, the bottom sidewall mold plate 56 may have a circular flange 72 and the O-ring 30 at the outside diameter of the bottom sidewall mold ring. The actuating ring 20 may include a bronzed radially inner cylindrical surface 38 and a bronzed radially outer cylindrical surface 32 to minimize wear and a closer fit with mating surfaces. Thus, the tire mold 10 may accept same size tires as a standard mold, may fit the same presses, and may provide a superior tire product.

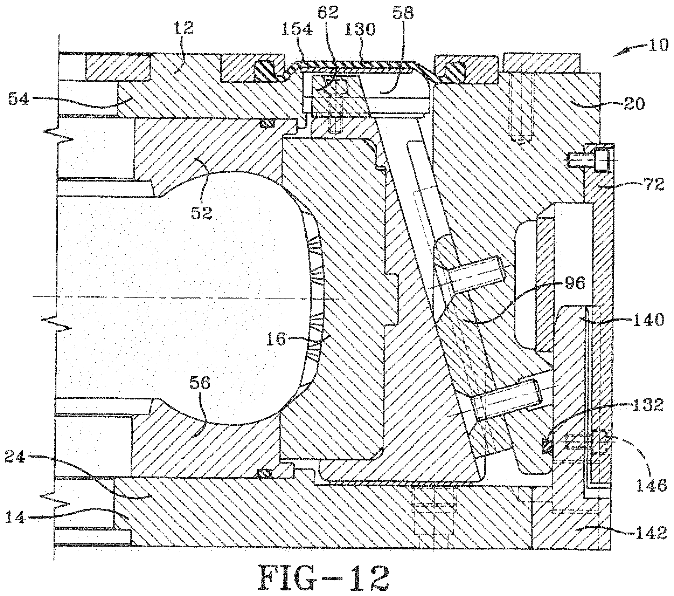

With reference to FIG. 12, another example assembly is described. Many of the elements of the example shown in FIG. 12 are similar or the same as elements shown in the example shown in FIG. 1. The tire mold 10 includes an upper sidewall mold assembly 12, a lower sidewall mold assembly 14, and tread mold segments 16. In this example, the upper and lower sidewall mold assemblies 12, 14 are not a single piece, as in the example shown in FIG. 1, but instead comprise multiple pieces. The upper sidewall mold plate 52 abuts and cooperates with the upper mold support member 54 while the lower sidewall mold plate 56 abuts and cooperates with the lower mold member 24. An actuating ring 20 produces radial movement of the tread mold segments 16 as illustrated previously. The actuating ring 20 is connected to the tread mold segments 16 via retraction tee bolts 96. Retainer tee members 62 slide within pocket type slots 58.

The primary differences between this example and that shown in FIG. 1 concerns an upper sealing means 130 and a lower sealing means 132. The lower sealing means 132 includes a spring sealing ring 136 mounted on the actuating ring 20. The sealing ring 136 slides against a cylindrical shell 140 fixed on a bottom container plate 142. Four flat pins 146 are used to pre-center the actuating ring 20. The flat pins 146 are spaced 90° about the circumference of the tire mold 10 and are located in such a way as to best use the available space within the curing press (not shown). For example, the available space within the curing press may be square-shaped while the tire mold 10 may be round; therefore, the pins 146 may be placed in the corners of the square-shaped press space. The diameters of the actuating ring 20 and the cylindrical shell 140 may be thereby reduced. The upper sealing means 130 may be a sealing bladder 154, as described below.

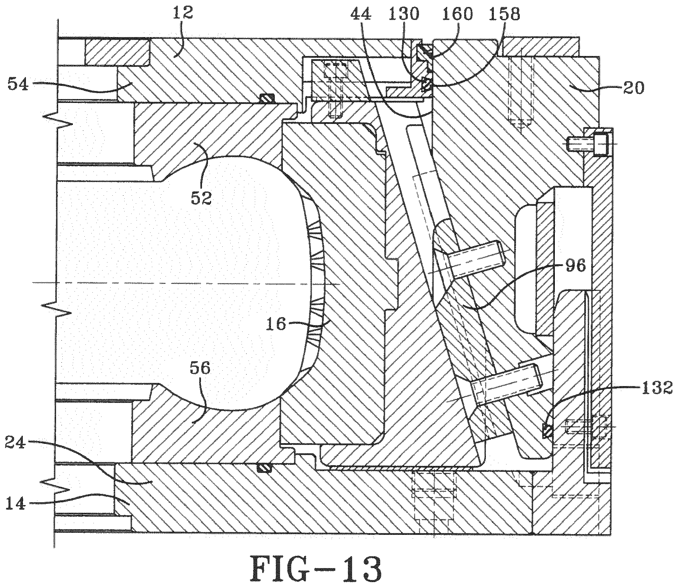

With reference to FIG. 13, another upper sealing means 130 may include a spring ring 158 which slides against the radially inner surface 44 of the actuating ring 20. The pre-centering of the upper mold plate 52 is accomplished by a pre centering ring 160 which may be made of PTFE or equivalent. The retainer tee members 62 shown in FIG. 1 may be replaced by a link system between the slide blocks 16 and the upper mold plate 52.

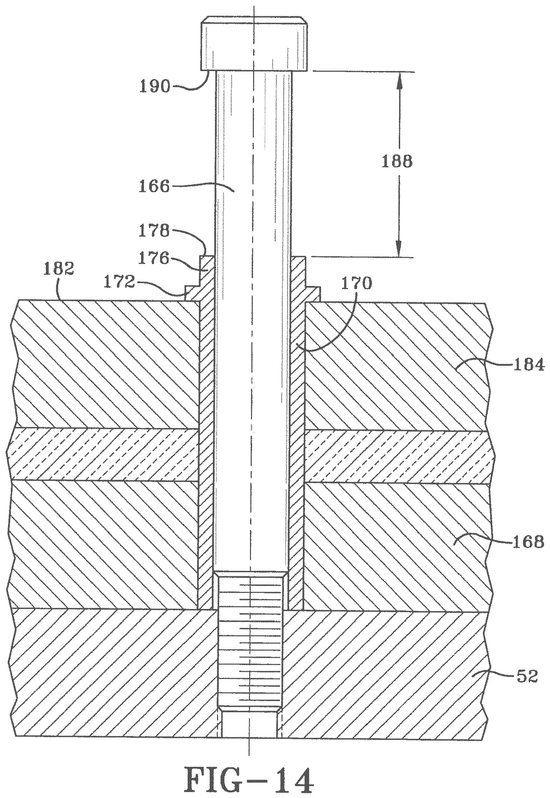

With reference to FIG. 14, another feature of the example shown in FIG. 13 is described. A mechanism to provide improved centering of the upper sidewall mold plate 52 with relation to the actuating ring 20 and lower mold member 24 is illustrated. A centering rod 166 may be mounted on top of an upper press platen 168. A sleeve 170 may include a flange 172 and an extension 176. Depending on the distance the top surface 178 of the extension extends above the top surface 182 of the top press platen support 184, the mold stroke, designated by line 188, may be adjustable. When the curing press is fully closed, the bottom surface 190 of the cap abuts the top surface 178 of the extension 176. The device shown in FIG. 14 may not be necessary for operation of the tire mold 10, but may be used to limit segment retraction and thereby replace the stop bolts 94 used in other examples.

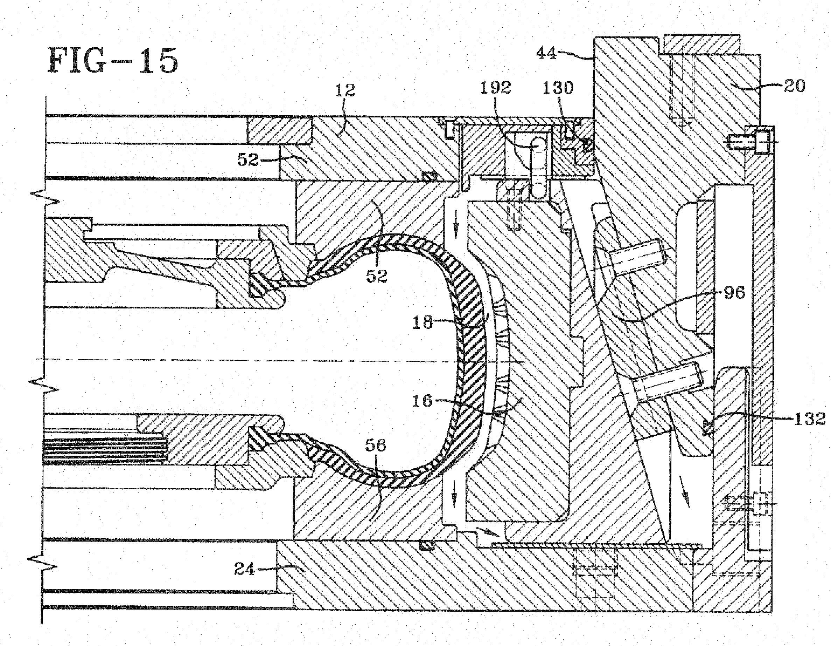

With reference to FIG. 15, the tire mold 10 may be air-tight so that the vacuum may be communicated to the mold cavity 18. The arrows indicate the flow of air being evacuated from the mold cavity 18 by the vacuum. The lower mold member 24 is mounted on a press board (not shown) and is stationary. The upper sidewall mold plate 52 is fastened to a top beam (not shown) of the curing press (not shown) and carries the upper sidewall mold plate 52 and the tread mold segments 16.

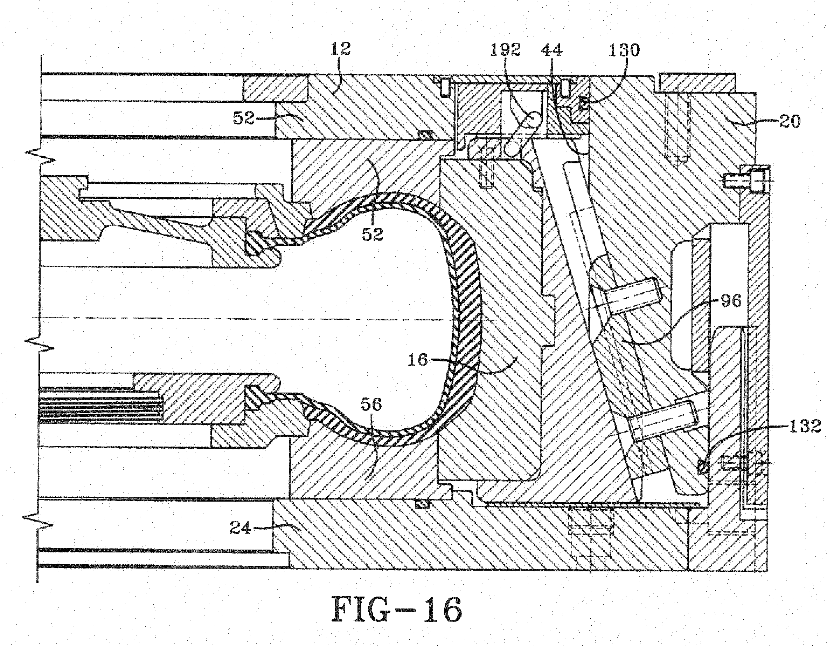

As the curing press begins to close, the upper sidewall mold plate 52 lowers the actuating ring 20, causing the tread segments 16 to swing on links 192 and move radially inward. Thus, the sequence of press closing begins with the top press beam being lowered. Next, the actuating ring 20 is lowered. Then, the upper sidewall mold plate 52 and tread mold segments 16 are lowered. This procedure is performed in such a way as to maintain a vacuum by maintaining a seal. With reference to FIG. 16, the tire mold 10 is shown in a closed position with the vacuum already drawn on it.

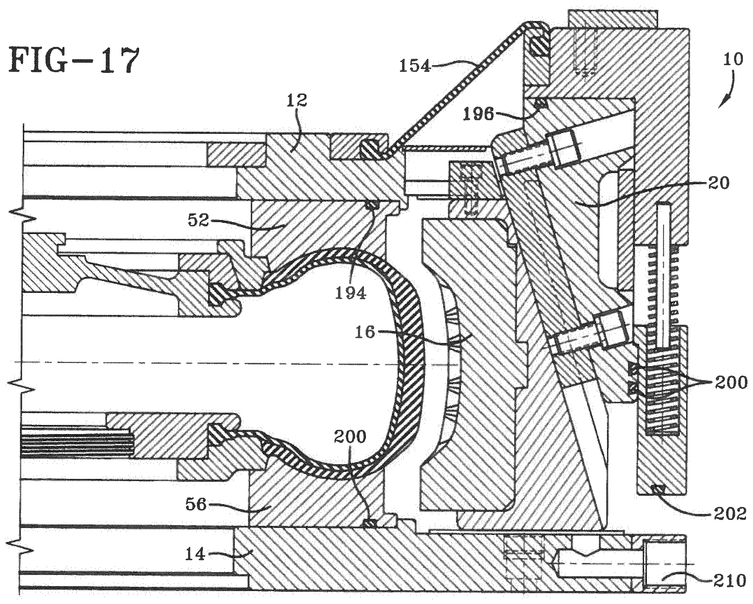

With reference to FIGS. 17 - 19, as above, many of the components are similar to the components of the other examples. The tire mold 10 includes an upper sidewall mold plate 52, a lower sidewall mold plate 56, tread mold segments 16, and an actuating ring 20. With reference to FIG. 17, the upper sealing means 130 is a sealing bladder 154. The sealing means further includes O-rings 194, 196. The lower sealing means includes O-rings 200, 202. When the actuating ring 20 moves upward, the tread mold segments 16 move radially outward. The seal is maintained by the bladder 154 stretching and reorienting itself.

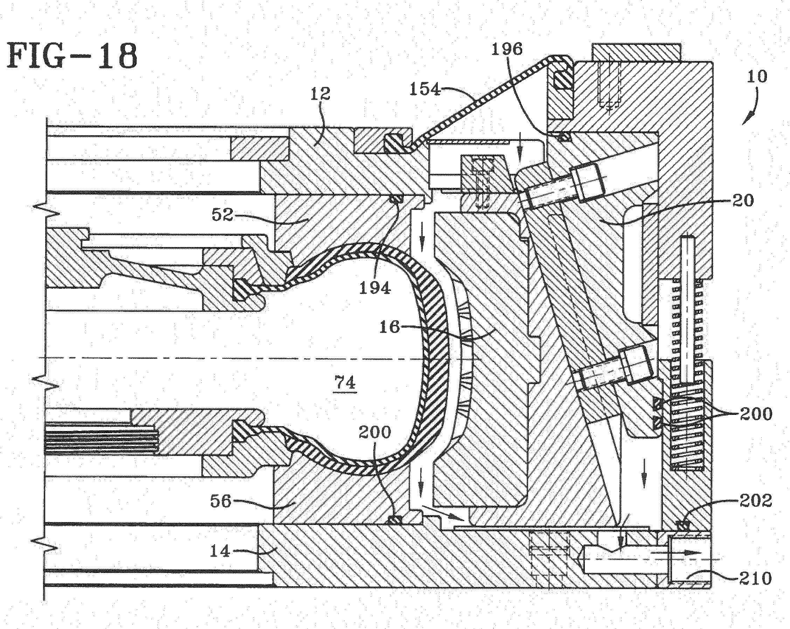

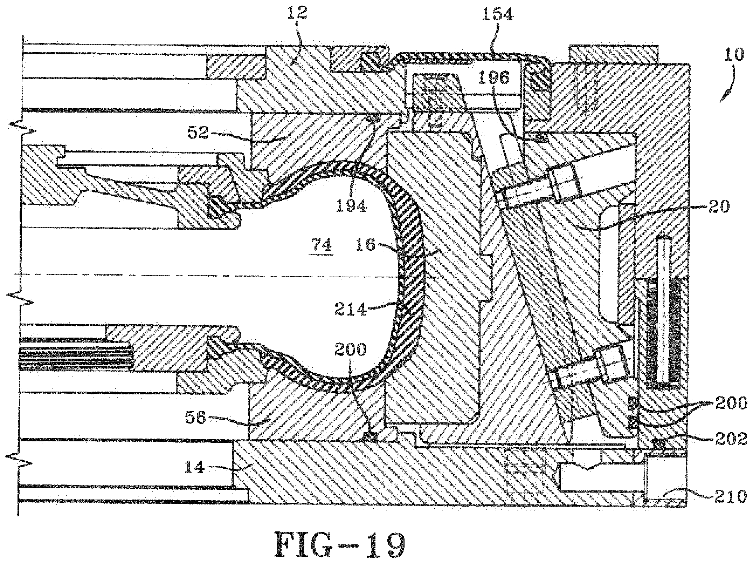

With reference to FIG. 18, the next step in the sequence is illustrated, wherein the actuating ring 20 moves downward, causing the tread mold segments 16 to move radially inward, and lessening the stretch on bladder 154. Vacuum is communicated by a passageway 210 and the tire mold 10 is evacuated. With reference to FIG. 19, the tire mold 10 is shown in a closed position and the vacuum is shut off while the tire 214 is vulcanized.

A vacuum container 500 in accordance with the present invention seals a conventional tire mold to make it airtight. There may be four locations for sealing: top (left & right) 501, bottom 502, screws 503, and inside (between mold plates and container plates) 504. Curing tires under vacuum allows ventless mold parts as no air is evacuated. To seal the top (left & right) and the bottom locations, cellular or massive silicone may be compressed and may fill any varying gap between the different pieces. The vacuum container 500 is airtight only when fully closed and pumped/evacuated only when fully closed. Conventional containers, such as the tire mold 10, may initially be partly closed and already airtight in this "not yet fully closed" condition. Subsequently, the tire mold 10 may be evacuated and, while pumping, the container may be fully closed.

The ventless mold construction saves costs not only in terms of buying and installing the large number of vents, but also in terms of maintenance of the tire mold 10 (no vents get lost, no vents need to be cleaned/removed, less molds out of service for maintenance, etc.). The vacuum container 500 can be externally smaller than conventional containers and preferably has no sliding parts thereby eliminating wear between such parts. During curing of a tire, small amounts of air may escape from the vacuum container 500 as it is opened to the outside through small gaps and surface roughness between neighboring parts. Hence, there is no need for vents or means to remove such air. When the vacuum container 500 is closed, the tire mold 10 may be evacuated over a period of time of about 30 sec. Thereafter, the vacuum pump may be disconnected and the vacuum container 500 with the tire may be opened to environmental pressure.

## Claims

1. A system for providing a vacuum in a segmented tire mold (10), the system comprising a vacuum container (500) and a segmented tire mold (10), the vacuum container (500) sealing the tire mold (10) to make it airtight, the tire mold (10) having an upper sidewall assembly (12) and a lower sidewall assembly (14), a plurality of radially moveable tread mold segments (16) operable with the upper sidewall assembly and the lower sidewall assembly to define a tire mold cavity (18) in the closed position of the tire mold (10), a conical actuating ring assembly (20) surrounding the tread mold segments for providing a radial movement of the tread mold segments (16) into engagement with the upper sidewall assembly (12) and the lower sidewall assembly (14), the vacuum container (500) comprising a top sealing means (501) between the actuating ring assembly (20) and the upper sidewall assembly (12), and a bottom sealing means (502) between the actuating ring assembly (20) and the lower sidewall assembly (14), such that the tire mold (10) is airtight and ready for evacuation or evacuated only when fully closed, **characterized in that** the top sealing means (502) and the bottom sealing means (502) comprises silicone and **in that** the tire mold (10) and the vacuum container (500) has no sliding seals.

2. The system as set forth in claim 1 further including a screw sealing means between external screws and mold pieces.

3. The system as set forth in claim 1 or 2 further including an inside sealing means between adjacent surfaces within the tire mold.

4. The system as set forth in at least one of the previous claims wherein the screw sealing means comprises silicone and/or wherein the inside sealing means comprises silicone.

5. The system as set forth in at least one of the previous claims wherein the bottom sealing means includes a sealing member disposed between the bottom surface of the actuating ring assembly and the lower sidewall assembly at the closing of the tire mold.

6. The system as set forth in at least one of the previous claims wherein the tread mold segments (16) are connected to the upper sidewall assembly (12) by support means permitting radial movement of the tread mold segments (16) in response to vertical movement of the actuating ring assembly (20) relative to the tread mold segments (16) and wherein the support means is covered to maintain the integrity of the tire mold cavity for application of vacuum.

7. The system of claim 1 wherein the vacuum container (500) is open to the outside through small gaps and surface roughness between neighboring parts such that small amounts of air may escape from the vacuum container (500) during curing of a tire.

## Patentansprüche

1. System zur Bereitstellung eines Vakuums in einer segmentierten Reifenform (10), wobei das System einen Vakuumbehälter (500) und eine segmentierte Reifenform (10) umfasst, wobei der Vakuumbehälter (500) die Reifenform (10) abdichtet, um sie luftdicht zu machen, wobei die Reifenform (10) eine obere Seitenwandanordnung (12) und eine untere Seitenwandanordnung (14) aufweist, eine Vielzahl radial bewegbarer Laufflächenformsegmente (16), die mit der oberen Seitenwandanordnung und der unteren Seitenwandanordnung betreibbar sind, um in der geschlossenen Position der Reifenform (10) einen Reifenformhohlraum (18) zu definieren, eine konische Betätigungsringanordnung (20), welche die Laufflächenformsegmente umgibt, um eine radiale Bewegung der Laufflächenformsegmente (16) in Eingriff mit der oberen Seitenwandanordnung (12) und der unteren Seitenwandanordnung (14) bereitzustellen, wobei der Vakuumbehälter (500) ein oberes Dichtungsmittel (501) zwischen der Betätigungsringanordnung (20) und der oberen Seitenwandanordnung (12) und ein unteres Dichtungsmittel (502) zwischen der Betätigungsringanordnung (20) und der unteren Seitenwandanordnung (14) umfasst, sodass die Reifenform (10) nur, wenn sie vollständig geschlossen ist, luftdicht und bereit zur Entlüftung ist oder entlüftet wird, **dadurch gekennzeichnet, dass** das obere Dichtungsmittel (502) und das untere Dichtungsmittel (502) Silikon umfasst und dass die Reifenform (10) und der Vakuumbehälter (500) keine Gleitdichtungen aufweisen.

2. System nach Anspruch 1, weiter ein Schraubdichtungsmittel zwischen äußeren Schrauben und Formteilen beinhaltend.

3. System nach Anspruch 1 oder 2, weiter ein inneres Dichtungsmittel zwischen benachbarten Oberflächen innerhalb der Reifenform beinhaltend.

4. System nach mindestens einem der vorhergehenden Ansprüche, wobei das Schraubdichtungsmittel Silikon umfasst und/oder wobei das innere Dichtungsmittel Silikon umfasst.

5. System nach mindestens einem der vorhergehenden Ansprüche, wobei das untere Dichtungsmittel ein beim Schließen der Reifenform zwischen der Unterseite der Betätigungsringanordnung und der unteren Seitenwandanordnung angeordnetes Dichtungselement beinhaltet.

6. System nach mindestens einem der vorhergehenden Ansprüche, wobei die Laufflächenformsegmente (16) mittels Stützmitteln, die eine radiale Bewegung der Laufflächenformsegmente (16) in Reaktion auf eine vertikale Bewegung der Betätigungsringanordnung (20) in Bezug auf die Laufflächenformsegmente (16) gestatten, mit der oberen Seitenwandanordnung (12) verbunden sind, und wobei das Stützmittel abgedeckt ist, um die Vollständigkeit des Reifenformhohlraums zum Anlegen von Vakuum aufrechtzuerhalten.

7. System nach Anspruch 1, wobei der Vakuumbehälter (500) durch kleine Spalte und Oberflächenrauheit zwischen benachbarten Teilen offen zur Außenseite ist, sodass während des Vulkanisierens eines Reifens geringe Luftmengen aus dem Vakuumbehälter (500) entweichen können.

## Revendications

1. Système pour procurer un vide dans un moule segmenté (10) pour bandage pneumatique, le système comprenant un récipient de vide (500) et un moule segmenté (10) pour bandage pneumatique, le récipient de vide (500) rendant étanche le moule (10) pour bandage pneumatique afin de le rendre étanche à l'air, le moule (10) pour bandage pneumatique possédant un assemblage de flanc supérieur (12) et un assemblage de flanc inférieur (14), un certain nombre de segments de moule de bande de roulement (16) mobiles en direction radiale qui peuvent être activés avec l'assemblage de flanc supérieur et avec l'assemblage de flanc inférieur pour définir une cavité de moule (18) pour le bandage pneumatique dans la position fermée du moule (10) pour bandage pneumatique, un assemblage conique d'anneau d'activation (20) entourant les segments de moule de bande de roulement pour procurer un mouvement radial des segments de moule de bande de roulement (16) de mise en contact avec l'assemblage de flanc supérieur (12) et l'assemblage de flanc inférieur (14), le récipient de vide (500) comprenant un moyen d'étanchéité de sommet (501) entre l'assemblage d'anneau d'activation (20) et l'assemblage de flanc supérieur (12), et un moyen d'étanchéité de base (502) entre l'assemblage d'anneau d'activation (20) et l'assemblage de flanc inférieur (14), d'une manière telle que le moule (10) pour bandage pneumatique est étanche à l'air et prêt pour la mise sous vide ou est soumis à une mise sous vide uniquement lorsqu'il est complètement fermé, **caractérisé en ce que** le moyen d'étanchéité de sommet (502) et le moyen d'étanchéité de base (502) comprennent de la silicone et **en ce que** le moule (10) pour bandage pneumatique et le récipient de vide (500) ne possèdent aucun joint coulissant.

2. Système selon la revendication 1, englobant un moyen d'étanchéité par vis entre des vis externes et des pièces moulées.

3. Système selon la revendication 1 ou 2, englobant en outre un moyen d'étanchéité interne entre des surfaces adjacentes au sein du moule pour bandage pneumatique.

4. Système selon au moins une des revendications précédentes, dans lequel le moyen d'étanchéité à vis comprend de la silicone et/ou dans lequel le moyen d'étanchéité interne comprend de la silicone.

5. Système selon au moins une des revendications précédentes, dans lequel le moyen d'étanchéité de base englobe un élément d'étanchéité disposé entre la surface de base de l'assemblage d'anneau d'activation et l'assemblage de flanc inférieur à la fermeture du moule pour bandage pneumatique.

6. Système selon au moins une des revendications précédentes, dans lequel les segments (16) du moule de bande de roulement sont reliés à l'assemblage de flanc supérieur (12) par des moyens de support permettant un mouvement radial des segments (16) du moule de bande de roulement en réponse au mouvement vertical de l'assemblage d'anneau d'activation (20) par rapport aux segments (16) du moule de bande de roulement et dans lequel les moyens de support sont recouverts pour maintenir l'intégrité de la cavité du moule pour bandage pneumatique pour l'application de vide.

7. Système selon la revendication 1, dans lequel le récipient de vide (500) est ouvert sur l'extérieur à travers de petits espaces libres et une rugosité de surface entre des parties voisines, d'une manière telle que de petites quantités d'air peuvent s'échapper du récipient de vide (500) au cours de la vulcanisation d'un bandage pneumatique.
